(19) Europäisches Patentamt / European Patent Office / Office européen des brevets

(11) **EP 2 608 438 B1**

(12) **EUROPEAN PATENT SPECIFICATION**

(45) Date of publication and mention
of the grant of the patent:
**05.04.2017  Bulletin 2017/14**

(21) Application number: **11862846.0**

(22) Date of filing: **25.10.2011**

(51) Int Cl.:
***H04J 3/16*** (2006.01)

(86) International application number:
**PCT/CN2011/081225**

(87) International publication number:
**WO 2013/059983 (02.05.2013 Gazette 2013/18)**

(54) **DYNAMIC BANDWIDTH ALLOCATION METHOD AND DEVICE**

DYNAMISCHES BANDBREITENZUWEISUNGSVERFAHREN UND VORRICHTUNG

PROCÉDÉ ET DISPOSITIF D'ATTRIBUTION DYNAMIQUE DE LARGEUR DE BANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.06.2013  Bulletin 2013/26**

(73) Proprietor: **Shenzhen Hisilicon Technologies Co.,
Ltd.
Guangdong 518129 (CN)**

(72) Inventor: **JIANG, Dailin
Guangdong 518129 (CN)**

(74) Representative: **Pfenning, Meinig & Partner mbB
Patent- und Rechtsanwälte
Theresienhöhe 11a
80339 München (DE)**

(56) References cited:
**EP-A1- 1 796 313        CN-A- 1 445 940
CN-A- 101 742 368     CN-A- 102 045 605
CN-A- 102 118 212**

**Description**

**FIELD OF THE INVENTION**

The present invention relates to the field of communications, and in particular, to a dynamic bandwidth allocation method and apparatus.

**BACKGROUND OF THE INVENTION**

To improve the bandwidth utilization ratio, in a PON (Passive Optical Network, passive optical network) system that is mainly formed by an OLT (Optical Line Termination, optical line terminal) at a central office, ONUs (Optical Network Units, optical network units) at a user end, and an ODN (Optical Distribution Network, optical distribution network) in the middle, the OLT delivers a Grant (grant) to each ONU by means of broadcasting, and notifies the ONU of start time and a time length of sending data, so as to manage that the ONU adopts a time division multiplexing manner to send data to the OLT. The process of delivering the Grant is bandwidth allocation.

In the prior art, when bandwidth allocation is performed, a periodical DBA (Dynamic Bandwidth Allocation, dynamic bandwidth allocation) manner is generally adopted. In this manner, all the ONUs send Reports (bandwidth request) to the OLT, and the OLT allocates a bandwidth to each ONU dynamically according to the Reports and an SLA (Service Level Agreement, Service Level Agreement), where the Reports and the SLA are sent by the ONUs and collected in a previous cycle. Besides, an RTT (Round Trip Time, round trip time) delay exists in data transmission on an optical path, namely, a delay from delivering a Grant by the OLT to receiving the Grant by the ONU and a delay from using the Grant to send data to the OLT by the ONU to receiving the data by the OLT. Therefore, in the prior art, delay compensation is applied to ensure that each ONU uses the Grant efficiently. A delay compensation method is to use an endpoint of a Max_RTT (Max Round Trip Time, maximum round trip time) as a start time of receiving the data sent by the ONU, where the start time is specified in the Grant.

The prior art at least has the following disadvantages.

In the prior art, the endpoint of the Max_RTT is used as the start time of receiving the data sent by the ONU, where the start time is specified in the Grant. Therefore, the data and the Report that are sent by the ONU arrive at the OLT after the Max_RTT. If the Max_RTT is not equal to the length of an allocation cycle, Reports collected by the OLT in a current allocation cycle include Reports sent by the ONU after the Grant is delivered in a previous allocation cycle and the current allocation cycle. Therefore, the Reports collected by the OLT in the current allocation cycle cannot accurately reflect a bandwidth actually required in an allocation cycle, resulting in that a Grant calculated on that basis is not accurate, so that not only the bandwidth cannot be utilized efficiently, but also the bandwidth utilization ratio is reduced.

EP 1796131 A1 relates to a method and communication system for controlling accesses to a shared medium. Under the method for controlled accesses to a shared medium between a central communication unit and several peripheral communication units, there are status information being sent from the peripheral communication units to the central communication unit, whereby the status information are representing each information to be sent from a peripheral communication unit over the shared medium and/or requests for accessing the shared medium. The status information being sent from the peripheral communication units during a given time interval are being collected and evaluated centrally.

**SUMMARY OF THE INVENTION**

The problems described above are solved by the dynamic bandwidth allocation method according to claim 1 and the dynamic bandwidth allocation apparatus according to claim 8 . The respective dependent claims describe advantageous developments of the dynamic bandwidth allocation method according to claim 1 and the dynamic bandwidth allocation apparatus according to claim 8.

The technical solutions provided by the embodiments of the present invention have the following beneficial effects:

In the dynamic bandwidth allocation method and apparatus according to the embodiments of the present invention, the bandwidths allocated to all the ONUs in the current allocation cycle are calculated according to the bandwidth requests collected in the previous allocation cycle, and the start time of the bandwidths is the start point of the $N^{th}$ allocation cycle after the current allocation cycle, so that the calculated bandwidths are in a corresponding allocation cycle, and a time point when the data and the bandwidth requests that are sent by the ONUs according to a time slice in the allocated bandwidths arrive at the OLT is after the start point of the corresponding allocation cycle and before an end time point of the allocation cycle. Therefore, the situation bandwidth requests in different upload cycles are received in the same allocation cycle never occurs, so the bandwidth requests in different upload cycles never overlap. That is to say, the obtained bandwidth requests are accurate, and the bandwidths calculated according to the bandwidth requests are more accurate, so that the bandwidth utilization ratio can be improved effectively.

## BRIEF DESCRIPTION OF THE DRAWINGS

To describe the technical solutions in the embodiments of the present invention more clearly, accompanying drawings that need to be used for describing the embodiments are briefly introduced below. Apparently, the accompanying drawings in the following description are merely some embodiments of the present invention, and persons of ordinary skill in the art may further obtain other drawings according to these accompanying drawings without making creative efforts.

FIG. 1 is a schematic architecture diagram of a PON system;
FIG. 2 is a flowchart of a dynamic bandwidth allocation method provided by Embodiment 1 of the present invention;
FIG. 3a is a flowchart of a dynamic bandwidth allocation method provided by Embodiment 2 of the present invention;
FIG. 3b is a schematic diagram of an application of Embodiment 2 of the present invention;
FIG. 4a is a flowchart of a dynamic bandwidth allocation method provided by Embodiment 3 of the present invention;
FIG. 4b is a schematic diagram of an application of Embodiment 3 of the present invention;
FIG. 5 is a schematic diagram of a dynamic bandwidth allocation apparatus provided by Embodiment 4 of the present invention; and
FIG. 6 is a schematic diagram of a dynamic bandwidth allocation apparatus provided by Embodiment 5 of the present invention.

## DETAILED DESCRIPTION OF THE EMBODIMENTS

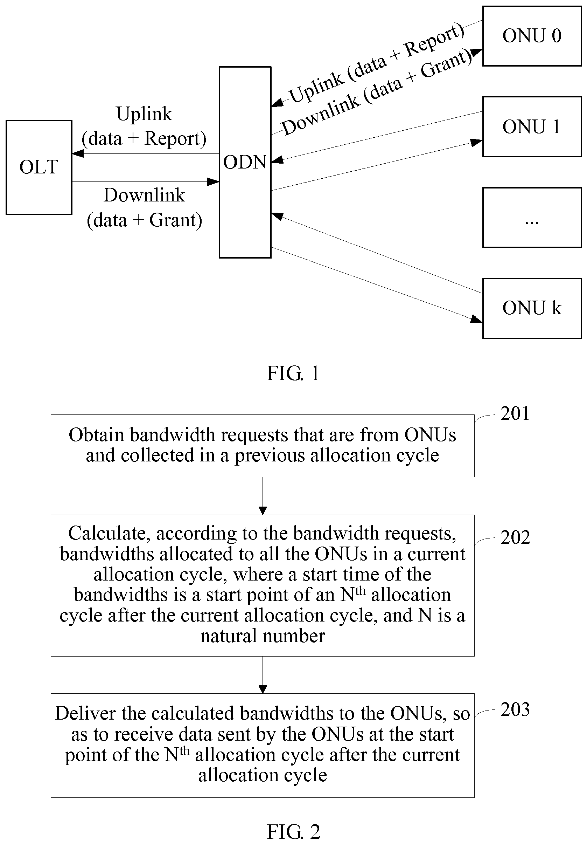

In order to make the objectives, technical solutions, and advantages of the present invention more comprehensible, the present invention is described in further detail with reference to the accompanying drawings. A PON system is a broadband access network architecture, and can use a passive ODN to assist an OLT in broadband communication with multiple ONUs at a user end. As shown in FIG. 1, the PON system is mainly formed by an OLT at a central office, multiple ONUs at a user end, and an ODN in the middle. Through the ODN, optical path connection between one OLT and multiple ONUs is achieved. A carrier of an optical path is fibers. A dynamic bandwidth allocation method and apparatus adopted in the PON system are described in detail below.

## Embodiment 1

As shown in FIG. 2, an embodiment of the present invention provides a dynamic bandwidth allocation method, where the method includes the following steps.

201: Obtain bandwidth requests that are from ONUs and collected in a previous allocation cycle.

202: Calculate, according to the bandwidth requests, bandwidths allocated to all the ONUs in a current allocation cycle, where a start time of the bandwidths is a start point of an $N^{th}$ allocation cycle after the current allocation cycle, and N is a natural number.

Further, in this step, N may be determined according to the following inequality:

(N - 1) * a length of the allocation cycle $\leq$ time required for calculating the bandwidths + Max_RTT $\leq$ N * the length of the allocation cycle, where the time required for calculating the bandwidths refers to the time spent by an OLT in calculating the bandwidths allocated to all the ONUs, Max_RTT is a maximum round trip time preset in the system, and the maximum round trip time is greater than or equal to a maximum value of the round trip time of all the ONUs.

203: Deliver the calculated bandwidths to the ONUs, so as to receive data sent by the ONUs at the start point of the $N^{th}$ allocation cycle after the current allocation cycle.

It should be noted that, the foregoing N is also called as a grant delay. In the $N^{th}$ allocation cycle after the current allocation cycle, the ONU uses the bandwidth allocated in the current cycle to send data and a bandwidth request. Therefore, for the ONU, the $N^{th}$ allocation cycle after the current allocation cycle may also be called as an $N^{th}$ upload cycle after the current allocation cycle.

Specifically, the time when the OLT delivers the calculated bandwidths is after completion of calculating the bandwidths and before subtracting the Max_RTT from the start time of the calculated bandwidths. In this way, it can be ensured that each ONU receives the delivered bandwidth in advance, so that a specified time slice can be effectively used to send the data and the bandwidth request, and the OLT may receive the data sent by the ONU at the start point

of the N<sup>th</sup> allocation cycle after the current allocation cycle.

Preferably, before the next allocation cycle begins, the OLT delivers the calculated bandwidth to the ONU, so as to reduce a delay of sending the data and the bandwidth request by the ONU, and improve the bandwidth utilization ratio. More preferably, the OLT may deliver the bandwidth to the ONU immediately after completion of calculation.

In the embodiment of the present invention, the bandwidths allocated to all the ONUs in the current allocation cycle are calculated according to the bandwidth requests collected in the previous allocation cycle, and the start time of the bandwidths is the start point of the N$^{th}$ allocation cycle after the current allocation cycle, so that the calculated bandwidth is in a corresponding allocation cycle, and a time point when the data and the bandwidth requests that are sent by the ONUs according to the time slice in the bandwidths arrive at the OLT is after the start point of the corresponding allocation cycle and before an end time point of the allocation cycle. Therefore, the situation that bandwidth requests in different upload cycles are received in the same allocation cycle never occurs, and overlapping of the bandwidth requests in different upload cycles never is eliminated. That is to say, the obtained bandwidth requests are accurate, and the bandwidths calculated according to the bandwidth requests are more accurate, so that the bandwidth utilization ratio may be improved effectively.

**Embodiment 2**

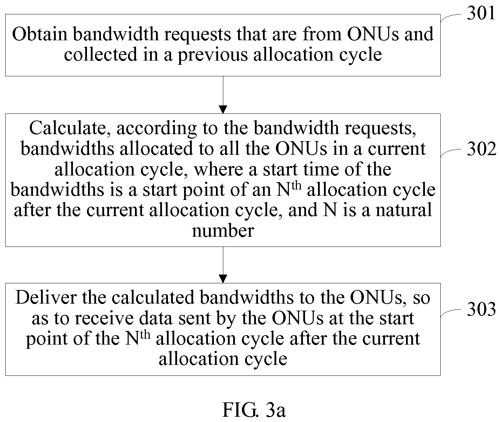

An embodiment of the present invention provides a dynamic bandwidth allocation method. In the embodiment of the present invention, taking the situation that the length of an allocation cycle is fixed and the length of all allocation cycles is the same as an example, the method provided by the embodiment of the present invention is described in detail. As shown in FIG. 3a, the method includes the following steps.

301: Obtain bandwidth requests that are from ONUs and collected in a previous allocation cycle.

302: Calculate, according to the bandwidth requests, bandwidths allocated to all the ONUs in a current allocation cycle, where a start time of the bandwidths is a start point of an N$^{th}$ allocation cycle after the current allocation cycle, and N is a natural number.

Further, in this step, a specific value of N is not limited in this embodiment, and in practical application, N may be determined according to the following inequality:

(N - 1) * a length of the allocation cycle ≤ time required for calculating the bandwidths + Max_RTT ≤ N * the length of the allocation cycle, where the time required for calculating the bandwidths refers to the time spent by an OLT in calculating bandwidths allocated to all the ONUs, Max_RTT is a maximum round trip time preset in the system, and the maximum round trip time is greater than or equal to a maximum value of the round trip time of all the ONUs.

Preferably, the bandwidths allocated to all the ONUs in the current allocation cycle are calculated according to the bandwidth requests and the bandwidths allocated in N allocation cycles before the current allocation cycle.

Specifically, a bandwidth allocated by the OLT to an ONU in an n$^{th}$ allocation cycle may be calculated according to the following formulas:

$$g(n)=r(n-1)-g(n-1)- \ldots -g(n-N+1)-g(n-N); \qquad (1)$$

and

$$g(-N)=g(1-N)= \ldots =g(0) =0 \qquad (2)$$

In the formulas, r(n) represents a bandwidth requested by the ONU from the OLT in a bandwidth request collected in the n$^{th}$ allocation cycle, and g(n) represents a bandwidth allocated by the OLT to the ONU in the n$^{th}$ allocation cycle. As mentioned above, in an (n+N)$^{th}$ upload cycle, the ONU uses the bandwidth g(n) allocated by the OLT to the ONU in the n$^{th}$ allocation cycle.

The derivation process of the foregoing formula (1) is described briefly below.

It is assumed that a(n) is an input traffic of the ONU in the n$^{th}$ allocation cycle, and the input traffic is an upload traffic input by a terminal device to the ONU. In practical application, the ONU sends r(n) to the OLT according to the received input traffic a(n). Therefore, a(n) is invisible to the OLT, and the bandwidth required by the ONU is reflected by r(n). For the ONU,

$$r(n)=a(n)+r(n-1)-g(n-N) \qquad (3)$$

The foregoing formula means that: the bandwidth requested by the ONU in the $n^{th}$ cycle is a result obtained by subtracting a bandwidth g(n-N) already used in the $n^{th}$ cycle from a sum of the input traffic received in the $n^{th}$ cycle and a bandwidth requested by the ONU in an $(n-1)^{th}$ cycle. In this embodiment, the bandwidth is delivered in advance. Therefore, for the OLT, g(n-N) represents a bandwidth allocated by the OLT to the ONU in an $(n-N)^{th}$ allocation cycle. For the ONU, g(n-N) is equal to a bandwidth that the ONU can use in an $n^{th}$ upload cycle. In an ideal state, the bandwidth allocated to the ONU is equal to the input traffic received by the ONU, namely,

$$g(n)=a(n-1) \qquad (4)$$

Now, it is assumed that the ONU starts to send a bandwidth request to the OLT in a $0^{th}$ cycle. Before the $0^{th}$ cycle, the ONU sends no bandwidth request to the OLT. Therefore, an initial condition is r(-1) = 0. The OLT does not start to calculate the bandwidth allocated to the ONU until a cycle after receiving the bandwidth request. Therefore, the bandwidths allocated by the OLT to the ONU in the $0^{th}$ cycle and before the $0^{th}$ cycle are expressed as 0, and the foregoing formula (2) is obtained.

When n = 0, according to formulas (2) and (3) and the initial condition r(-1) = 0, it may be obtained that r(0) = a(0).

When n = 1, according to formula (4), there is g(1) = a(0).

Therefore, g(1) = r(0), and according to formulas (2) and (3), there is r(1) = a(1) + r(0) - g(1-N) = a(1) + g(1).

Therefore, it may be deduced that a(1) = r(1) - g(1).

When n = 2, according to formula (4), there is g(2) = a(1).

Therefore, g(2) = r(1) - g(1), and according to formulas (2) and (3), there is r(2) = a(2) + r(1) - g(2-N) = a(2) + g(2) + g(1).

Therefore, it may be deduced that a(2) = r(2) - g(1) - g(2).

When n = 3, according to formula (4), there is g(3) = a(2).

Therefore, g(3) = r(2) - g(2) - g(1).

Moreover, according to formulas (2) and (3), there is r(3) = a(3) + r(2) - g(3-N) = a(3) + g(3) + g(2) + g(1).

The rest may be deduced by analogy.

When n = N, according to formula (4), there is g(N) = a(N-1).

Therefore, g(N) = r(N-1) - g(N-1)- ... - g(1), and according to formulas (2) and (3), there is r(N) = a(N) + r(N-1) - g(0) = a(N) + g(N) + g(N-1) + ... + g(1), it may be deduced that a(N) = r(N) - g(N) - ... - g(2).

When n = N+1, g (N+1) = a(N).

Therefore, g(N+1) = r(N)-g(N) -... - g(2), and, r(N+1) = a(N+1) + r(N) - g(1) = a(N+1) + g(N+1) + ... + g(2).

The rest may be deduced by analogy.

When n = n, r(n) = a(n) + r(n-1) - g(n-N) = a(n) + g(n) + g(n-1) + ... + g(n-N+1), and g(n) = a(n-1),

Therefore, g(n) = r(n-1) - g(n-1) - g(n-2) - ... - g(n-N+1) - g(n-N).

It can be seen from the foregoing derivation process that, in the foregoing formula, the bandwidths that are already used by the ONUs in the N allocation cycles before the current allocation cycle n are taken into consideration. Therefore, the allocated bandwidths that are calculated according to the formula are more accurate, so that the finally-delivered allocated bandwidths are the same as the input traffic or comply with the SLA, and the bandwidth utilization ratio is maximized.

It can be easily known that, step 302 may also adopt an existing method to calculate the allocated bandwidth. That is, the bandwidths are allocated merely according to the received bandwidth request without taking the bandwidths used by the ONUs from the current allocation cycle n to the $N^{th}$ allocation cycle into consideration. In this case, g(n) = r(n-1).

303: Deliver the calculated bandwidths to the ONUs, so as to receive data sent by the ONUs at the start point of the $N^{th}$ allocation cycle after the current allocation cycle.

Specifically, the time when the OLT delivers the calculated bandwidths is after completion of calculating the bandwidths and before subtracting the Max_RTT from the start time of the calculated bandwidths. In this way, it can be ensured that each ONU receives the delivered bandwidth in advance, so that a specified time slice can be effectively used to send the data and the bandwidth request, and the OLT may receive the data and a new bandwidth request that are sent by the ONU at the start point of the $N^{th}$ allocation cycle after the current allocation cycle.

Preferably, before the next allocation cycle begins, the OLT delivers the calculated bandwidth to the ONU, so as to reduce a delay of sending the data and the bandwidth request by the ONU and improve the bandwidth utilization ratio. More preferably, the OLT may deliver the bandwidth to the ONU immediately after completion of calculation.

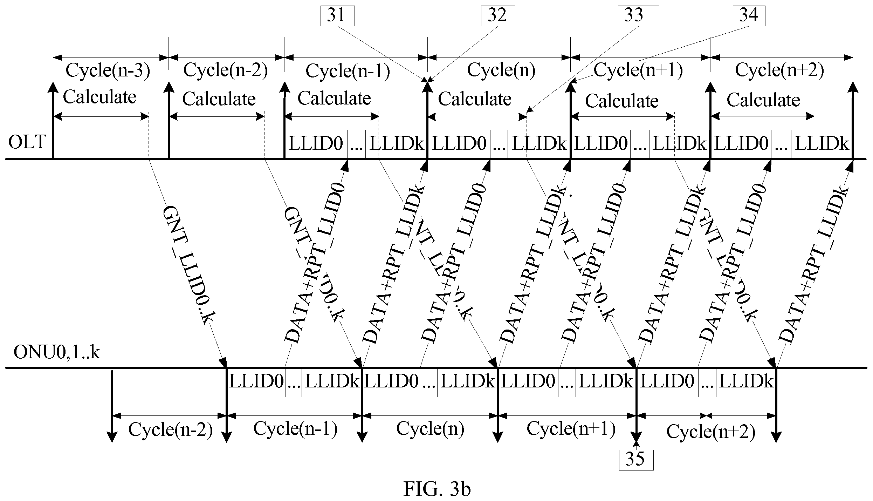

In this embodiment, the lengths of all allocation cycles are the same and fixed, and a grant delay is 2, namely, N = 2. As shown in FIG. 3b, at 31, collection of the bandwidth request r(n-1) in the (n-1)$^{th}$ allocation cycle Cycle(n-1) is completed, and the calculation of the allocated bandwidth starts. At 32, the allocated bandwidth is calculated according to the bandwidth request r(n-1), history bandwidth requests, bandwidth allocation and other information, and the bandwidth g(n) allocated in the n$^{th}$ allocation cycle Cycle(n) is calculated. At 33, after completion of the calculation, the allocated bandwidth g(n) in the n$^{th}$ allocation cycle Cycle(n) is delivered. At 34, collection of the bandwidth request r(n) in the n$^{th}$ allocation cycle Cycle(n) is completed, and a new round of calculation of the allocated bandwidth starts, and the above steps are repeated. At 35, the ONU obtains the allocated bandwidth g(n) at an (n+2)$^{th}$ allocation cycle Cycle(n+2), and sends a packet and a bandwidth request r(n+2). It can be seen from FIG. 3b that, a start point of calculating the allocated bandwidths is the start point of the allocation cycle and is fixed; an endpoint of collecting the bandwidth requests is an endpoint of the allocation cycle and is fixed; the time of the allocated bandwidths is exactly aligned with the allocation cycle; and in a time slice for grant, the data of the ONU arrives at the OLT on time without overlapping.

In the embodiment of the present invention, the bandwidths allocated to all the ONUs in the current allocation cycle are calculated according to the bandwidth requests collected in the previous allocation cycle, and the start time of the bandwidths is the start point of the N$^{th}$ allocation cycle after the current allocation cycle, so that the calculated bandwidths are in a corresponding allocation cycle, and a time point when the data and the bandwidth requests that are sent by the ONUs according to a time slice in the bandwidths arrive at the OLT is after the start point of the corresponding allocation cycle and before an end time point of the allocation cycle. Therefore, the situation that bandwidth requests in different upload cycles are received in the same allocation cycle never occurs, and overlapping of the bandwidth requests in different upload cycles is eliminated. That is to say, the obtained bandwidth requests are accurate, and the allocated bandwidths calculated according to the bandwidth requests are more accurate, so that the bandwidth utilization ratio can be improved effectively.

**Embodiment 3**

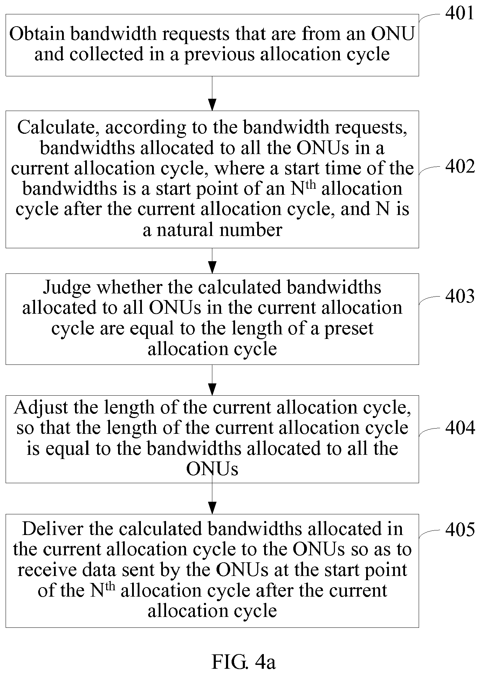

This embodiment provides a dynamic bandwidth allocation method. In this embodiment, taking the situation that the length of an allocation cycle is variable as an example, the method provided by the embodiment of the present invention is described. As shown in FIG. 4a, the method includes the following steps.

401: Obtain bandwidth requests that are from ONUs and collected in a previous allocation cycle.

402: Calculate, according to the bandwidth requests, bandwidths allocated to all the ONUs in a current allocation cycle, where a start time of the bandwidths is a start point of an N$^{th}$ allocation cycle after the current allocation cycle, and N is a natural number.

Further, in this step, a specific value of N is not limited in this embodiment, and in practical application, N may be determined according to the following inequality:

$(N - 1) *$ a length of the allocation cycle $\leq$ time required for calculating bandwidths + Max_RTT $\leq N *$ the length of the allocation cycle, where the time required for calculating bandwidths refers to time spent by an OLT in calculating bandwidths allocated to all the ONUs, Max_RTT is maximum round trip time preset in the system, and the maximum round trip time is greater than or equal to a maximum value of the round trip time of all the ONUs.

Preferably, the bandwidths allocated to all the ONUs in the current allocation cycle are calculated according to the bandwidth requests and bandwidths allocated in N allocation cycles before the current allocation cycle.

Specifically, a bandwidth allocated by the OLT to an ONU in an n$^{th}$ cycle may be calculated according to the foregoing formulas (1) and (2).

The allocated bandwidths calculated according to formulas (1) and (2) may make finally-delivered allocation cycles be the same as an input traffic or compliant with the SLA, thereby maximizing the bandwidth utilization ratio. The principle is the same as the foregoing step 302, and details are not described herein again.

403: Judge whether the calculated bandwidths allocated to all the ONUs in the current allocation cycle are equal to the length of a preset allocation cycle. A bandwidth allocated to each ONU in the current allocation cycle is an integer multiple of a maximum transmission unit of the corresponding ONU respectively. If not equal, go to step 404; if equal, go to step 405 directly.

The maximum transmission unit refers to a maximum length of a packet that may be transmitted by the ONU.

404: Adjust the length of the current allocation cycle, so that the length of the current allocation cycle is equal to the bandwidths allocated to all the ONUs.

Specifically, before this step, the dynamic bandwidth allocation method further includes: setting a maximum adjustment value of the length of the allocation cycle. The maximum adjustment value is less than or equal to the maximum transmission unit. Accordingly, the adjusting the length of the current allocation cycle specifically includes: adjusting the length of the current allocation cycle according to the maximum adjustment value. The set maximum adjustment value is not limited in this embodiment, and in practical application, the maximum adjustment value may be the maximum transmission unit or a half of the maximum transmission unit.

It can be easily known that, according to the foregoing bandwidth calculation method, a difference between the bandwidths allocated in the current allocation cycle and the length of the preset allocation cycle is never greater than or equal to the maximum transmission unit.

Further, the adjusting the length of the current allocation cycle according to the maximum adjustment value specifically includes:

If the calculated bandwidths allocated to all the ONUs in the current allocation cycle are greater than the length of the preset allocation cycle, and the difference between the bandwidths and the length of the preset allocation cycle is less than the maximum adjustment value, the difference is accrued into the next allocation cycle.

If the calculated bandwidths allocated to all the ONUs in the current allocation cycle are greater than the length of the preset allocation cycle, and the difference between the bandwidths and the length of the preset allocation cycle is greater than the maximum adjustment value but less than the maximum transmission unit, bandwidths are borrowed from the next allocation cycle in advance, where the length of the bandwidths borrowed in advance is a difference between the foregoing difference and the maximum transmission unit.

If the calculated bandwidths allocated to all the ONUs in the current allocation cycle are less than the length of the preset allocation cycle, and the difference between the bandwidths and the length of the preset allocation cycle is less than the maximum adjustment value, bandwidths are borrowed from the next allocation cycle in advance, where the length of the bandwidths borrowed in advance is the difference.

If the calculated bandwidths allocated to all the ONUs in the current allocation cycle are less than the length of the preset allocation cycle, and the difference between the bandwidths and the length of the preset allocation cycle is greater than the maximum adjustment value but less than the maximum transmission unit, the bandwidths are accrued into the next allocation cycle, where the length of the accrued bandwidths is a difference between the foregoing difference and the maximum transmission unit.

Obviously, after the length of the current allocation cycle is adjusted, and when the bandwidths allocated by the OLT to the ONUs in the next allocation cycle is calculated, the length of the bandwidths borrowed in the current allocation cycle from the next allocation cycle in advance or the length of the bandwidths accrued into the next allocation cycle needs to be taken into consideration, so that an average value of the sum of the lengths of all allocation cycles is substantially equal to the preset allocation cycle, and the lengths of all allocation cycles may be different, so such a situation may also be called as implicit fixed allocation cycles, while the foregoing situation that the lengths of the allocation cycles are fixed may be called as explicit allocation cycles.

The length of the current allocation cycle is adjusted to match with the bandwidths calculated by the OLT in the current allocation cycle, so that the OLT can deliver the bandwidths calculated in the current allocation cycle to the ONUs, so as to improve the bandwidth utilization ratio.

405: Deliver the calculated bandwidths allocated in the current allocation cycle to the ONUs, so as to receive data sent by the ONUs at the start point of the $N^{th}$ allocation cycle after the current allocation cycle.

Specifically, the time when the OLT delivers the calculated bandwidths is after completion of calculating the bandwidths and before subtracting the Max_RTT from the start time of the calculated bandwidths. In this way, it can be ensured that each ONU receives the delivered bandwidth in advance, so that a specified time slice can be effectively used to send the data and the bandwidth request, and the OLT may receive the data sent by the ONUs at the start point of the $N^{th}$ allocation cycle after the current allocation cycle.

Preferably, before the next allocation cycle begins, the OLT delivers the calculated bandwidth to the ONU, so as to reduce a delay of sending the data and the bandwidth request by the ONU, and improve the bandwidth utilization ratio. More preferably, the OLT may deliver the bandwidth to the ONU immediately after completion of calculation.

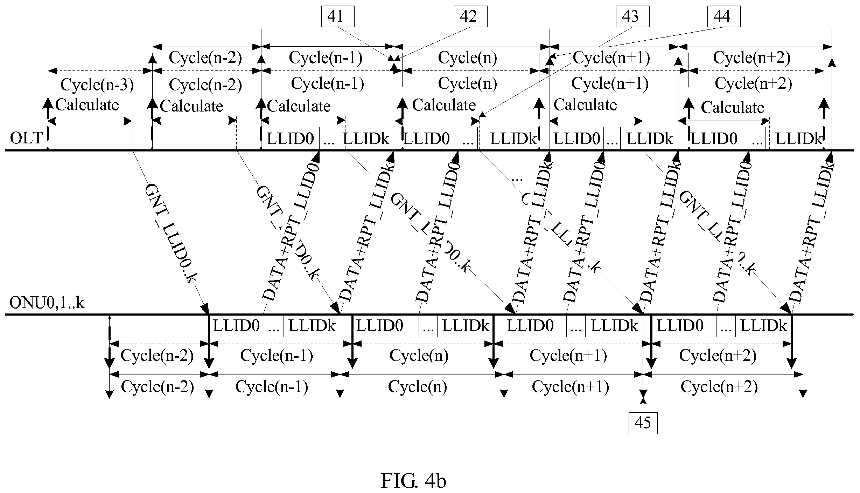

In this embodiment, the lengths of the allocation cycles are variable, and a grant delay is 2, namely, N = 2. As shown in FIG. 4b, at 41, collection of the bandwidth request r(n-1) in the $(n-1)^{th}$ allocation cycle Cycle(n-1) is completed, and the calculation of the allocated bandwidth starts. At 42, the allocated bandwidth is calculated according to the bandwidth request r(n-1), history bandwidth requests, bandwidth allocation and other information, and the bandwidth g(n) allocated in the $n^{th}$ allocation cycle Cycle(n) is calculated. At 43, after completion of the calculation, the allocated bandwidth g(n) in the $n^{th}$ allocation cycle Cycle(n) is delivered. At 44, collection of the bandwidth request r(n) in the $n^{th}$ allocation cycle Cycle(n) is completed, and a new round of calculation of the allocated bandwidth starts, and the above steps are repeated. At 45, the ONU obtains a bandwidth grant g(n) at an $(n+2)^{th}$ allocation cycle Cycle(n+2), and sends a packet and the bandwidth request r(n+2). It can be seen from FIG. 4b that, a start point of calculating the allocated bandwidths is the start point of the allocation cycle, but is not fixed; an endpoint of collecting the bandwidth requests is an endpoint of the allocation cycle, but is not fixed. Although the length of the allocation cycle is variable, the allocated bandwidths are still aligned with the allocation cycles. That is, the allocated bandwidths are also variable, so that wastes of tail fragments can be reduced or eliminated, and the bandwidth utilization ratio can be further improved. Because the wastes of the tail fragments can be reduced or eliminated, this embodiment is specifically applicable to an EPON (Ethernet Passive Optical Network, Ethernet passive optical network) system.

In the embodiment of the present invention, the bandwidths allocated to all the ONUs in the current allocation cycle are calculated according to the bandwidth requests collected in the previous allocation cycle, and the start time of the bandwidths is the start point of the $N^{th}$ allocation cycle after the current allocation cycle, so that the allocated bandwidths that are calculated are in a corresponding allocation cycle, and a time point when the data and the bandwidth requests that are sent by the ONUs according to a time slice in the bandwidths arrive at the OLT is after the start point of the corresponding allocation cycle and before an end time point of the allocation cycle. Therefore, the situation that bandwidth requests in different upload cycles are received in the same allocation cycle never occurs, so overlapping of the bandwidth requests in different upload cycles is eliminated. That is to say, the obtained bandwidth requests are accurate, and the bandwidths calculated according to the bandwidth requests are more accurate, so that the bandwidth utilization ratio can be improved effectively.

**Embodiment 4**

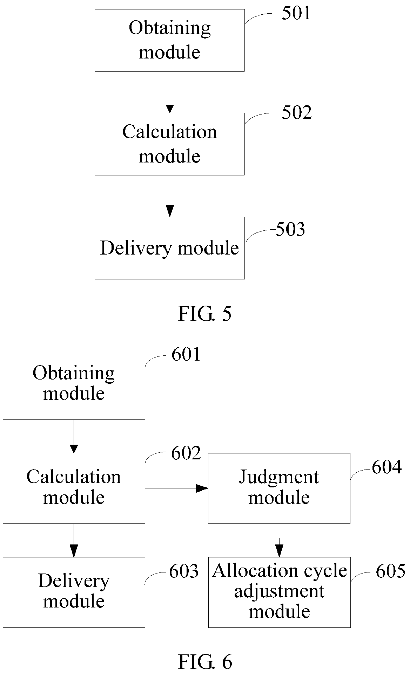

As shown in FIG. 5, an embodiment of the present invention provides a dynamic bandwidth allocation apparatus, where the apparatus includes:

an obtaining module 501, configured to obtain bandwidth requests that are from ONUs and collected in a previous allocation cycle;
a calculation module 502, configured to calculate, according to the bandwidth requests obtained by the obtaining module 501, bandwidths allocated to all the ONUs in a current allocation cycle, where a start time of the bandwidths is a start point of an $N^{th}$ allocation cycle after the current allocation cycle, and N is a natural number; and
a delivery module 503, configured to deliver the bandwidths calculated by the calculation module 502 to the ONUs, so as to receive data sent by the ONUs at the start point of the $N^{th}$ allocation cycle after the current allocation cycle.

Further, the dynamic bandwidth allocation apparatus further includes:

an N value determination module, configured to determine a value of N according to the following inequality:

(N - 1) * a length of the allocation cycle $\leq$ time required for calculating bandwidths + Max_RTT $\leq$ N * the length of the allocation cycle, where Max_RTT is greater than or equal to a maximum value of the round trip time of all the ONUs.

Preferably, the calculation module 502 calculates, according to the bandwidth requests and bandwidths allocated previously, the bandwidths allocated to all the ONUs in the current allocation cycle.

Further, the calculation module 502 calculates, according to the foregoing formulas (1) and (2), the bandwidths allocated to all the ONUs in the current allocation cycle.

Specifically, after completion of calculating the bandwidths, and before subtracting the Max_RTT from the start time of the calculated bandwidths, the delivery module 503 delivers the calculated bandwidths to the ONUs, so as to ensure that each ONU receives the delivered bandwidth in advance, so that a specified time slice can be effectively used to send the data and the bandwidth request, and an OLT may receive the data sent by the ONU at the start point of the $N^{th}$ allocation cycle after the current allocation cycle.

Preferably, before the next allocation cycle begins, the delivery module 503 delivers the bandwidths calculated by the calculation module 502 to the ONUs, so as to receive the data sent by the ONUs at the start point of the $N^{th}$ allocation cycle after the current allocation cycle.

In the embodiment of the present invention, the bandwidths allocated to all the ONUs in the current allocation cycle are calculated according to the bandwidth requests collected in the previous allocation cycle, and the start time of the bandwidths is the start point of the $N^{th}$ allocation cycle after the current allocation cycle, so that the calculated bandwidths are in a corresponding allocation cycle, and a time point when the data and the bandwidth requests that are sent by the ONUs according to a time slice in the bandwidths arrive at the OLT is after the start point of the corresponding allocation cycle and before an end time point of the allocation cycle. Therefore, the situation that bandwidth requests in different upload cycles are received in the same allocation cycle never occurs, so overlapping of the bandwidth requests in different upload cycles is eliminated. That is to say, the obtained bandwidth requests are accurate, and the allocated bandwidths calculated according to the bandwidth requests are more accurate, so that the bandwidth utilization ratio can be improved effectively.

**Embodiment 5**

As shown in FIG. 6, an embodiment of the present invention provides a dynamic bandwidth allocation apparatus.

The apparatus includes:

an obtaining module 601, configured to obtain bandwidth requests that are from ONUs and collected in a previous allocation cycle;

a calculation module 602, configured to calculate, according to the bandwidth requests obtained by the obtaining module 601, bandwidths allocated to all the ONUs in a current allocation cycle, where a start time of the bandwidths is a start point of an $N^{th}$ allocation cycle after the current allocation cycle, and N is a natural number; and

a delivery module 603, configured to deliver the bandwidths calculated by the calculation module 602 to the ONUs, so as to receive data sent by the ONUs at the start point of the $N^{th}$ allocation cycle after the current allocation cycle.

Further, the dynamic bandwidth allocation apparatus further includes:

a judgment module 604, configured to judge whether the bandwidths that are allocated to all the ONUs in the current allocation cycle and calculated by the calculation module 602 are equal to the length of a preset allocation cycle, where the bandwidth allocated to each ONU in the current allocation cycle is an integer multiple of a maximum transmission unit of the corresponding ONU respectively; and

an allocation cycle adjustment module 605, configured to, when a judgment result of the judgment module 604 is negative, adjust the length of the current allocation cycle, so that the length of the current allocation cycle is equal to the bandwidths allocated to all the ONUs.

Further, the dynamic bandwidth allocation apparatus further includes:

an N value determination module, configured to determine a value of N according to the following inequality:

(N - 1) * a length of the allocation cycle $\leq$ time required for calculating bandwidths + Max_RTT $\leq$ N * the length of the allocation cycle, where Max_RTT is greater than or equal to a maximum value of the round trip time of all the ONUs.

Further, the dynamic bandwidth allocation apparatus further includes:

a setting module, configured to set a maximum adjustment value of the length of the allocation cycle, where the maximum adjustment value is less than or equal to the maximum transmission unit.

Accordingly, the allocation cycle adjustment module 605 adjusts the length of the current allocation cycle according to the maximum adjustment value set by the setting module.

Further, the allocation cycle adjustment module 605 includes:

a comparison unit, configured to compare a difference between the bandwidths allocated to all the ONUs in the current allocation cycle and the length of the preset allocation cycle with the maximum adjustment value; and

an adjustment unit, configured to, when the calculated bandwidths allocated to all the ONUs in the current allocation cycle are greater than the length of the preset allocation cycle, and the difference between the bandwidths and the length of the preset allocation cycle is less than the maximum adjustment value, accrue the difference into the next allocation cycle;

when the calculated bandwidths allocated to all the ONUs in the current allocation cycle are greater than the length of the preset allocation cycle, and the difference between the bandwidths and the length of the preset allocation cycle is greater than the maximum adjustment value but less than the maximum transmission unit, borrow bandwidths from the next allocation cycle in advance, where the length of the bandwidths borrowed in advance is a difference between the foregoing difference and the maximum transmission unit;

when the calculated bandwidths allocated to all the ONUs in the current allocation cycle are less than the length of the preset allocation cycle, and the difference between the bandwidths and the length of the preset allocation cycle is less than the maximum adjustment value, borrow bandwidths from the next allocation cycle in advance, where the length of the bandwidths borrowed in advance is the difference; or

when the calculated bandwidths allocated to all the ONUs in the current allocation cycle are less than the length of the preset allocation cycle, and the difference between the bandwidths and the length of the preset allocation cycle is greater than the maximum adjustment value but less than the maximum transmission unit, accrue the bandwidths into the next allocation cycle, where the length of the accrued bandwidths is a difference between the foregoing difference and the maximum transmission unit.

Preferably, the calculation module 602 calculates, according to the foregoing bandwidth requests and bandwidths allocated previously, the bandwidths allocated to all the ONUs in the current allocation cycle.

Further, the calculation module 602 calculates, according to the foregoing formulas (1) and (2), the bandwidths allocated to all the ONUs in the current allocation cycle.

Specifically, after completion of calculating the bandwidths, and before subtracting the Max_RTT from the start time of the calculated bandwidths, the delivery module 603 delivers the calculated bandwidths to the ONUs, so as to ensure that each ONU receives the delivered bandwidth in advance, so that a specified time slice can be effectively used to send the data and the bandwidth request, and an OLT may receive the data and a new bandwidth request that are sent by the ONU at the start point of the $N^{th}$ allocation cycle after the current allocation cycle.

Preferably, before the next allocation cycle begins, the delivery module 603 delivers the bandwidths calculated by the calculation module 502 to the ONUs, so as to receive the data sent by the ONUs at the start point of the $N^{th}$ allocation cycle after the current allocation cycle.

In the embodiment of the present invention, the bandwidths allocated to all the ONUs in the current allocation cycle are calculated according to the bandwidth requests collected in the previous allocation cycle, and the start time of the bandwidths is the start point of the $N^{th}$ allocation cycle after the current allocation cycle, so that the allocated bandwidths that are calculated are in a corresponding allocation cycle, and a time point when the data and the bandwidth requests that are sent by the ONUs according to a time slice in the bandwidths arrive at the OLT is after the start point of the corresponding allocation cycle and before an end time point of the allocation cycle. Therefore, the situation that bandwidth requests in different upload cycles are received in the same allocation cycle never occurs, so overlapping of the bandwidth requests in different upload cycles is eliminated. That is to say, the obtained bandwidth requests are accurate, and the allocated bandwidths calculated according to the bandwidth requests are more accurate, so that the bandwidth utilization ratio can be improved effectively.

It should be noted that, when the dynamic bandwidth allocation apparatus provided by the foregoing embodiment allocates bandwidths, the foregoing functional modules are taken as an example for description. In practical application, the foregoing functions may be undertaken by different functional modules according to requirements, that is, the internal structure of the apparatus is divided into different functional modules to implement all or part of the foregoing functions. Besides, the dynamic bandwidth allocation apparatus and the dynamic bandwidth allocation method provided by the foregoing embodiments belong to the same concept, and for a specific implementation process, reference can be made to the method embodiments, and details are not described herein again.

Persons of ordinary skill in the art may understand that all or part of the steps of the foregoing embodiments may be implemented by hardware, and may also be implemented by a program instructing relevant hardware. The program may be stored in a computer readable storage medium. The foregoing storage medium may be a read-only memory, a magnetic disk, or a compact disk.

The foregoing descriptions are merely exemplary embodiments of the present invention, but are not intended to limit the present invention. Any modifications, equivalent replacements or improvements made without departing from the spirit and principle of the present invention shall fall within the protection scope of the present invention.

**Claims**

1. A dynamic bandwidth allocation method, comprising:

   Obtaining (301) bandwidth requests that are from optical network units and collected in a previous allocation cycle;

   Calculating (302), according to the bandwidth requests, bandwidths allocated to all the optical network units in a current allocation cycle, wherein a start time of the bandwidths is a start point of an $N^{th}$ allocation cycle after the current allocation cycle, and N is a natural number; and

   delivering (303) the calculated bandwidths to the optical network units, so as to receive data sent by the optical network units at the start point of the $N^{th}$ allocation cycle after the current allocation cycle **characterized in that** the N is determined according to the following inequality:

   (N - 1) * a length of the allocation cycle $\leq$ time required for calculating the bandwidths + Max_RTT $\leq$ N * the length of the allocation cycle, wherein Max_RTT is greater than or equal to a maximum value of the round trip time of all the optical network units.

2. The dynamic bandwidth allocation method according to claim 1, wherein the calculating (302), according to the bandwidth requests, the bandwidths allocated to all the optical network units in the current allocation cycle specifically comprises:

calculating, according to the bandwidth requests and bandwidths allocated in N allocation cycles before the current allocation cycle, the bandwidths allocated to all the optical network units in the current allocation cycle.

3. The dynamic bandwidth allocation method according to any one of claims 1 to 2, wherein:

a length of the allocation cycle is fixed, and the lengths of all allocation cycles are the same.

4. The dynamic bandwidth allocation method according to any one of claims 1 to 2, wherein a length of each allocation cycle is variable, and before the delivering (303) the calculated bandwidths to the optical network units, the method further comprises:

judging (403) whether the calculated bandwidths allocated to all the optical network units in the current allocation cycle are equal to a length of a preset allocation cycle, wherein the bandwidth allocated to each optical network unit in the current allocation cycle is an integer multiple of a maximum transmission unit of the corresponding optical network unit respectively; and
if the calculated bandwidths allocated to all the optical network units in the current allocation cycle are not equal to the length of the preset allocation cycle, adjusting (404) a length of the current allocation cycle, so that the length of the current allocation cycle is equal to the bandwidths allocated to all the optical network units.

5. The dynamic bandwidth allocation method according to claim 4, wherein before the adjusting the length of the current allocation cycle, the method further comprises:

setting a maximum adjustment value of the length of the allocation cycle, wherein the maximum adjustment value is less than or equal to the maximum transmission unit;
accordingly, the adjusting the length of the current allocation cycle specifically comprises:

adjusting the length of the current allocation cycle according to the maximum adjustment value.

6. The dynamic bandwidth allocation method according to claim 5, wherein the adjusting the length of the current allocation cycle according to the maximum adjustment value specifically comprises:

if the calculated bandwidths allocated to all the optical network units in the current allocation cycle are greater than the length of the preset allocation cycle, and a difference between the bandwidths and the length of the preset allocation cycle is less than the maximum adjustment value, accruing the difference into a next allocation cycle;
if the calculated bandwidths allocated to all the optical network units in the current allocation cycle are greater than the length of the preset allocation cycle, and the difference between the bandwidths and the length of the preset allocation cycle is greater than the maximum adjustment value but less than the maximum transmission unit, borrowing bandwidths from the next allocation cycle in advance, wherein a length of the bandwidths borrowed in advance is a difference between the foregoing difference and the maximum transmission unit;
if the calculated bandwidths allocated to all the optical network units in the current allocation cycle are less than the length of the preset allocation cycle, and the difference between the bandwidths and the length of the preset allocation cycle is less than the maximum adjustment value, borrowing bandwidths from the next allocation cycle in advance, wherein a length of the bandwidths borrowed in advance is the difference; and
if the calculated bandwidths allocated to all the optical network units in the current allocation cycle are less than the length of the preset allocation cycle, and the difference between the bandwidths and the length of the preset allocation cycle is greater than the maximum adjustment value but less than the maximum transmission unit, accruing the bandwidths into the next allocation cycle, wherein a length of the accrued bandwidths is a difference between the foregoing difference and the maximum transmission unit.

7. The dynamic bandwidth allocation method according to claim 1, wherein the delivering the calculated bandwidths to the optical network units specifically comprises:

before a next allocation cycle begins, delivering the calculated bandwidths allocated in the current allocation cycle to the optical network units.

8. A dynamic bandwidth allocation apparatus, comprising:

an obtaining module (501), configured to obtain bandwidth requests that are from optical network units and collected in a previous allocation cycle;

a calculation module (502), configured to calculate, according to the bandwidth requests obtained by the obtaining module, bandwidths allocated to all the optical network units in a current allocation cycle, wherein a start time of the bandwidths is a start point of an $N^{th}$ allocation cycle after the current allocation cycle, and N is a natural number; and

a delivery module (503), configured to deliver the bandwidths calculated by the calculation module to the optical network units, so as to receive data sent by the optical network units at the start point of the $N^{th}$ allocation cycle after the current allocation cycle **characterized by**

an N value determination module, configured to determine a value of N according to the following inequality:

(N - 1) * a length of the allocation cycle $\leq$ time required for calculating the bandwidths + Max_RTT $\leq$ N * the length of the allocation cycle, wherein Max_RTT is greater than or equal to a maximum value of the round trip time of all the optical network units.

9. The dynamic bandwidth allocation apparatus according to claim 8, wherein the calculation module (502) is configured to calculate, according to the bandwidth requests and bandwidths allocated in N allocation cycles before the current allocation cycle, the bandwidths allocated to all the optical network units in the current allocation cycle.

10. The dynamic bandwidth allocation apparatus according to any one of claims 8 to 9, further comprising:

a judgment module (604), configured to judge whether the bandwidths allocated to all the optical network units in the current allocation cycle are equal to a length of a preset allocation cycle, wherein the bandwidth allocated to each optical network unit in the current allocation cycle is an integer multiple of a maximum transmission unit of the corresponding optical network unit respectively; and

an allocation cycle adjustment module (605), configured to, when a judgment result of the judgment module is negative, adjust a length of the current allocation cycle, so that the length of the current allocation cycle is equal to the bandwidths allocated to all the optical network units.

11. The dynamic bandwidth allocation apparatus according to claim 10, further comprising:

a setting module, configured to set a maximum adjustment value of the length of the allocation cycle, and accordingly, the allocation cycle adjustment module adjusts the length of the current allocation cycle according to the maximum adjustment value set by the setting module.

12. The dynamic bandwidth allocation apparatus according to claim 11, wherein the allocation cycle adjustment module comprises:

a comparison unit, configured to compare a difference between the bandwidths allocated to all the optical network units in the current allocation cycle and the length of the preset aliocation cycle with the maximum adjustment value; and

an adjustment unit, configured to, when the calculated bandwidths allocated to all the optical network units in the current allocation cycle are greater than the length of the preset allocation cycle, and the difference between the bandwidths and the length of the preset allocation cycle is less than the maximum adjustment value, accrue the difference into a next allocation cycle;

when the calculated bandwidths allocated to all the optical network units in the current allocation cycle are greater than the length of the preset allocation cycle, and the difference between the bandwidths and the length of the preset allocation cycle is greater than the maximum adjustment value but less than the maximum transmission unit, borrow bandwidths from the next allocation cycle in advance, wherein a length of the bandwidths borrowed in advance is a difference between the foregoing difference and the maximum transmission unit;

when the calculated bandwidths allocated to all the optical network units in the current allocation cycle are less than the length of the preset allocation cycle, and the difference between the bandwidths and the length of the preset allocation cycle is less than the maximum adjustment value, borrow bandwidths from the next allocation cycle in advance, wherein a length of the bandwidths borrowed in advance is the difference; and

when the calculated bandwidths allocated to all the optical network units in the current allocation cycle are less than the length of the preset allocation cycle, and the difference between the bandwidths and the length of the preset allocation cycle is greater than the maximum adjustment value but less than the maximum transmission unit, accrue the bandwidths into the next allocation cycle, wherein a length of the accrued bandwidths is a difference between the foregoing difference and the maximum transmission unit.

13. The dynamic bandwidth allocation apparatus according to claim 8, wherein the delivery module (503) is configured to, before a next allocation cycle begins, deliver the bandwidths calculated by the calculation module to the optical network units before start, so as to receive data sent by the optical network units at the start point of the $N^{th}$ allocation cycle after the current allocation cycle.

**Patentansprüche**

1. Dynamisches Bandbreitenzuweisungsverfahren, das Folgendes umfasst:

Erhalten (301) von Bandbreitenanfragen, die von optischen Netzwerkeinheiten stammen und in einem vorhergehenden Zuweisungszyklus gesammelt wurden;
Berechnen (302), gemäß den Bandbreitenanfragen, von Bandbreiten, die allen optischen Netzwerkeinheiten in einem gegenwärtigen Zuweisungszyklus zugewiesen sind, wobei eine Startzeit der Bandbreiten ein Startpunkt eines N-ten Zuweisungszyklus nach dem gegenwärtigen Zuweisungszyklus und N eine natürliche Zahl ist; und
Liefern (303) der berechneten Bandbreiten an die optischen Netzwerkeinheiten, so dass Daten, die durch die optischen Netzwerkeinheiten zu dem Startpunkt des N-ten Zuweisungszyklus nach dem gegenwärtigen Zuweisungszyklus gesendet werden, empfangen werden, **dadurch gekennzeichnet, dass** das N gemäß der folgenden Ungleichheit bestimmt wird:

(N - 1) * eine Länge des Zuweisungszyklus $\leq$ Zeit, die zum Berechnen der Bandbreiten benötigt wird + Max_RTT $\leq$ N * die Länge des Zuweisungszyklus, wobei Max_RTT größer oder gleich einem Maximalwert der Umlaufzeit aller optischen Netzwerkeinheiten ist.

2. Dynamisches Bandbreitenzuweisungsverfahren nach Anspruch 1, wobei das Berechnen (302), gemäß den Bandbreitenanfragen, der Bandbreiten, die allen optischen Netzwerkeinheiten in dem gegenwärtigen Zuweisungszyklus zugewiesen sind, spezifisch Folgendes umfasst:

Berechnen, gemäß den Bandbreitenanfragen und den Bandbreiten, die in N Zuweisungszyklen vor dem gegenwärtigen Zuweisungszyklus zugewiesen sind, der Bandbreiten, die allen optischen Netzwerkeinheiten in dem gegenwärtigen Zuweisungszyklus zugewiesen sind.

3. Dynamisches Bandbreitenzuweisungsverfahren nach einem der Ansprüche 1 bis 2, wobei:

eine Länge des Zuweisungszyklus festgelegt ist und die Längen aller Zuweisungszyklen die gleichen sind.

4. Dynamisches Bandbreitenzuweisungsverfahren nach einem der Ansprüche 1 bis 2, wobei eine Länge jedes Zuweisungszyklus veränderbar ist und das Verfahren vor dem Liefern (303) der berechneten Bandbreiten an die optischen Netzwerkeinheiten ferner Folgendes umfasst:

Einschätzen (403), ob die berechneten Bandbreiten, die allen optischen Netzwerkeinheiten in dem gegenwärtigen Zuweisungszyklus zugewiesen sind, gleich einer Länge eines voreingestellten Zuweisungszyklus sind, wobei die Bandbreite, die jeder optischen Netzwerkeinheit in dem gegenwärtigen Zuweisungszyklus zugewiesen ist, ein ganzzahliges Vielfaches einer jeweiligen Maximalübertragungseinheit der entsprechenden optischen Netzwerkeinheit ist; und
falls die berechneten Bandbreiten, die allen optischen Netzwerkeinheiten in dem gegenwärtigen Zuweisungszyklus zugewiesen sind, nicht gleich der Länge des voreingestellten Zuweisungszyklus sind, Einstellen (404) einer Länge des gegenwärtigen Zuweisungszyklus, so dass die Länge des gegenwärtigen Zuweisungszyklus gleich den Bandbreiten ist, die allen optischen Netzwerkeinheiten zugewiesen sind.

5. Dynamisches Bandbreitenzuweisungsverfahren nach Anspruch 4, wobei das Verfahren vor dem Einstellen der Länge des gegenwärtigen Zuweisungszyklus ferner Folgendes umfasst:

Festlegen eines Maximaleinstellungswerts der Länge des Zuweisungszyklus, wobei der Maximaleinstellungswert kleiner als oder gleich der Maximalübertragungseinheit ist;
dementsprechend das Einstellen der Länge des gegenwärtigen Zuweisungszyklus spezifisch Folgendes umfasst:

Einstellen der Länge des gegenwärtigen Zuweisungszyklus gemäß dem Maximaleinstellungswert.

6. Dynamisches Bandbreitenzuweisungsverfahren nach Anspruch 5, wobei das Einstellen der Länge des gegenwärtigen Zuweisungszyklus gemäß dem Maximaleinstellungswert spezifisch Folgendes umfasst:

falls die berechneten Bandbreiten, die allen optischen Netzwerkeinheiten in dem gegenwärtigen Zuweisungszyklus zugewiesen sind, größer als die Länge des voreingestellten Zuweisungszyklus sind und eine Differenz zwischen den Bandbreiten und der Länge des voreingestellten Zuweisungszyklus kleiner als der Maximaleinstellungswert ist, Ansammeln der Differenz in einem nächsten Zuweisungszyklus;
falls die berechneten Bandbreiten, die allen optischen Netzwerkeinheiten in dem gegenwärtigen Zuweisungszyklus zugewiesen sind, größer als die Länge des voreingestellten Zuweisungszyklus sind und die Differenz zwischen den Bandbreiten und der Länge des voreingestellten Zuweisungszyklus größer als der Maximaleinstellungswert aber kleiner als die Maximalübertragungseinheit ist, Leihen von Bandbreiten von dem nächsten Zuweisungszyklus im Voraus, wobei eine Länge der Bandbreiten, die im Voraus geliehen wurden, eine Differenz zwischen der vorangegangenen Differenz und der Maximalübertragungseinheit ist;
falls die berechneten Bandbreiten, die allen optischen Netzwerkeinheiten in dem gegenwärtigen Zuweisungszyklus zugewiesen sind, kleiner als die Länge des voreingestellten Zuweisungszyklus sind und die Differenz zwischen den Bandbreiten und der Länge des voreingestellten Zuweisungszyklus kleiner als der Maximaleinstellungswert ist, Leihen von Bandbreiten von dem nächsten Zuweisungszyklus im Voraus, wobei eine Länge der Bandbreiten, die im Voraus geliehen wurden, die Differenz ist; und
falls die berechneten Bandbreiten, die allen optischen Netzwerkeinheiten in dem gegenwärtigen Zuweisungszyklus zugewiesen sind, kleiner als die Länge des voreingestellten Zuweisungszyklus sind und die Differenz zwischen den Bandbreiten und der Länge des voreingestellten Zuweisungszyklus größer als der Maximaleinstellungswert aber kleiner als die Maximalübertragungseinheit ist, Ansammeln der Bandbreiten in den nächsten Zuweisungszyklus, wobei eine Länge der angesammelten Bandbreiten eine Differenz zwischen der vorangegangenen Differenz und der Maximalübertragungseinheit ist.

7. Dynamisches Bandbreitenzuweisungsverfahren nach Anspruch 1, wobei das Liefern der berechneten Bandbreiten an die optischen Netzwerkeinheiten spezifisch Folgendes umfasst:

bevor ein nächster Zuweisungszyklus beginnt, Liefern der berechneten Bandbreiten, die in dem gegenwärtigen Zuweisungszyklus zugewiesen sind, an die optischen Netzwerkeinheiten.

8. Dynamische Bandbreitenzuweisungsvorrichtung, die Folgendes umfasst:

ein Erhaltmodul (501), das dazu konfiguriert ist, Bandbreitenanfragen zu erhalten, die von optischen Netzwerkeinheiten stammen und in einem vorangegangenen Zuweisungszyklus gesammelt wurden;
ein Berechnungsmodul (502), das dazu konfiguriert ist, Bandbreiten, die allen optischen Netzwerkeinheiten in einem gegenwärtigen Zuweisungszyklus zugewiesen sind, gemäß den Bandbreitenanfragen, die durch das Erhaltmodul erhalten werden, zu berechnen, wobei eine Startzeit der Bandbreiten ein Startpunkt eines N-ten Zuweisungszyklus nach dem gegenwärtigen Zuweisungszyklus und N eine natürliche Zahl ist; und
ein Liefermodul (503), das dazu konfiguriert ist, die Bandbreiten, die durch das Berechnungsmodul berechnet werden, an die optischen Netzwerkeinheiten zu liefern, so dass Daten, die durch die optischen Netzwerkeinheiten gesendet werden, zum Startpunkt des N-ten Zuweisungszyklus nach dem gegenwärtigen Zuweisungszyklus empfangen werden, durch Folgendes gekennzeichnet
ein N-Wert-Bestimmungsmodul, das dazu konfiguriert ist, einen Wert von N gemäß der folgenden Ungleichheit zu bestimmen:

(N - 1) * eine Länge des Zuweisungszyklus $\leq$ Zeit, die zum Berechnen der Bandbreiten benötigt wird + Max_RTT $\leq$ N * die Länge des Zuweisungszyklus, wobei Max_RTT größer oder gleich einem Maximalwert der Umlaufzeit aller optischen Netzwerkeinheiten ist.

9. Dynamische Bandbreitenzuweisungsvorrichtung nach Anspruch 8, wobei das Berechnungsmodul (502) dazu konfiguriert ist, die Bandbreiten, die allen optischen Netzwerkeinheiten in dem gegenwärtigen Zuweisungszyklus zugewiesen sind, gemäß den Bandbreitenanfragen und den Bandbreiten, die in N Zuweisungszyklen vor dem gegenwärtigen Zuweisungszyklus zugewiesen sind, zu berechnen.

**10.** Dynamische Bandbreitenzuweisungsvorrichtung nach einem der Ansprüche 8 bis 9, die ferner Folgendes umfasst:

ein Einschätzungsmodul (604), das dazu konfiguriert ist, einzuschätzen, ob die Bandbreiten, die allen optischen Netzwerkeinheiten in dem gegenwärtigen Zuweisungszyklus zugewiesen sind, gleich einer Länge eines voreingestellten Zuweisungszyklus sind, wobei die Bandbreite, die jeder optischen Netzwerkeinheit in dem gegenwärtigen Zuweisungszyklus zugewiesen ist, ein ganzzahliges Vielfaches einer jeweiligen Maximalübertragungseinheit der entsprechenden optischen Netzwerkeinheit ist; und
ein Zuweisungszykluseinstellungsmodul (605), das dazu konfiguriert ist, eine Länge des gegenwärtigen Zuweisungszyklus so einzustellen, dass die Länge des gegenwärtigen Zuweisungszyklus gleich den Bandbreiten ist, die allen optischen Netzwerkeinheiten zugewiesen sind, wenn ein Einschätzungsergebnis des Einschätzungsmoduls negativ ist.

**11.** Dynamische Bandbreitenzuweisungsvorrichtung nach Anspruch 10, die ferner Folgendes umfasst:

ein Festlegungsmodul, das dazu konfiguriert ist, einen Maximaleinstellungswert der Länge des Zuweisungszyklus festzulegen, und
dementsprechend das Zuweisungszykluseinstellungsmodul die Länge des gegenwärtigen Zuweisungszyklus gemäß dem Maximaleinstellungswert, der durch das Festlegungsmodul festgelegt wird, einstellt.

**12.** Dynamische Bandbreitenzuweisungsvorrichtung nach Anspruch 11, wobei das Zuweisungszykluseinstellungsmodul Folgendes umfasst:

eine Vergleichseinheit, die dazu konfiguriert ist, eine Differenz zwischen den Bandbreiten, die allen optischen Netzwerkeinheiten in dem gegenwärtigen Zuweisungszyklus zugewiesen sind, und der Länge des voreingestellten Zuweisungszyklus mit dem Maximaleinstellungswert zu vergleichen; und
eine Einstellungseinheit, die dazu konfiguriert ist, die Differenz in einen nächsten Zuweisungszyklus anzusammeln, wenn die berechneten Bandbreiten, die allen optischen Netzwerkeinheiten in dem gegenwärtigen Zuweisungszyklus zugewiesen sind, größer als die Länge des voreingestellten Zuweisungszyklus sind und die Differenz zwischen den Bandbreiten und der Länge des voreingestellten Zuweisungszyklus kleiner als der Maximaleinstellungswert ist;
Bandbreiten von dem nächsten Zuweisungszyklus im Voraus zu leihen, wenn die berechneten Bandbreiten, die allen optischen Netzwerkeinheiten in dem gegenwärtigen Zuweisungszyklus zugewiesen sind, größer als die Länge des voreingestellten Zuweisungszyklus sind und die Differenz zwischen den Bandbreiten und der Länge des voreingestellten Zuweisungszyklus größer als der Maximaleinstellungswert aber kleiner als die Maximalübertragungseinheit ist, wobei eine Länge der Bandbreiten, die im Voraus geliehen wurden, eine Differenz zwischen der vorangegangenen Differenz und der Maximalübertragungseinheit ist;
Bandbreiten von dem nächsten Zuweisungszyklus im Voraus zu leihen, wenn die berechneten Bandbreiten, die allen optischen Netzwerkeinheiten in dem gegenwärtigen Zuweisungszyklus zugewiesen sind, kleiner als die Länge des voreingestellten Zuweisungszyklus sind und die Differenz zwischen den Bandbreiten und der Länge des voreingestellten Zuweisungszyklus kleiner als der Maximaleinstellungswert ist, wobei eine Länge der Bandbreiten, die im Voraus geliehen wurden, die Differenz ist; und
die Bandbreiten in den nächsten Zuweisungszyklus anzusammeln, wenn die berechneten Bandbreiten, die allen optischen Netzwerkeinheiten in dem gegenwärtigen Zuweisungszyklus zugewiesen sind, kleiner als die Länge des voreingestellten Zuweisungszyklus sind und die Differenz zwischen den Bandbreiten und der Länge des voreingestellten Zuweisungszyklus größer als der Maximaleinstellungswert aber kleiner als die Maximalübertragungseinheit ist, wobei eine Länge der angesammelten Bandbreiten eine Differenz zwischen der vorangegangenen Differenz und der Maximalübertragungseinheit ist.

**13.** Dynamische Bandbreitenzuweisungsvorrichtung nach Anspruch 8, wobei das Liefermodul (503) dazu konfiguriert ist, die Bandbreiten, die durch das Berechnungsmodul berechnet werden, an die optischen Netzwerkeinheiten vor dem Start zu liefern, bevor ein nächster Zuweisungszyklus beginnt, so dass Daten, die durch die optischen Netzwerkeinheiten zu dem Startpunkt des N-ten Zuweisungszyklus nach dem gegenwärtigen Zuweisungszyklus gesendet werden, empfangen werden.

**Revendications**

**1.** Procédé d'attribution de largeur de bande dynamique, consistant à :

- obtenir (301) des demandes de largeur de bande provenant d'unités de réseau optique et recueillies lors d'un cycle d'attribution précédent ;

- calculer (302), en fonction des demandes de largeur de bande, des largeurs de bande attribuées à toutes les unités de réseau optique lors d'un cycle d'attribution courant, un temps de départ des largeurs de bande étant un point de départ d'un Nème cycle d'attribution après le cycle d'attribution courant et N étant un nombre naturel ; et

- envoyer (303) les largeurs de bande calculées aux unités de réseau optique de manière à recevoir des données envoyées par les unités de réseau optique au point de départ du Nème cycle d'attribution après le cycle d'attribution courant, **caractérisé en ce que** N est déterminé en fonction de l'inégalité suivante :

(N-1)*une longueur du cycle d'attribution ≤ temps requis pour calculer les largeurs de bande + Max_RTT < N*la longueur du cycle d'attribution, où Max_RTT est supérieur ou égal à une valeur maximale du temps aller-retour de toutes les unités de réseau optique.

2. Procédé d'attribution de largeur de bande dynamique selon la revendication 1, dans lequel le calcul (302), en fonction des demandes de largeur de bande, des largeurs de bande attribuées à toutes les unités de réseau optique dans le cycle d'attribution courant consiste spécifiquement à calculer, en fonction des demandes de largeur de bande et des largeurs de bande attribuées lors de N cycles d'attribution avant le cycle d'attribution courant, les largeurs de bande attribuées à toutes les unités de réseau optique dans le cycle d'attribution courant.

3. Procédé d'attribution de largeur de bande dynamique selon l'une quelconque des revendications 1 à 2, dans lequel une longueur du cycle d'attribution est fixée et les longueurs de tous les cycles d'attribution sont identiques.

4. Procédé d'attribution de largeur de bande dynamique selon l'une quelconque des revendications 1 à 2, dans lequel une longueur de chaque cycle d'attribution est variable et, avant d'envoyer (303) les largeurs de bande calculées aux unités de réseau optique, le procédé consiste en outre à :

- estimer (403) si les largeurs de bande calculées attribuées à toutes les unités de réseau optique dans le cycle d'attribution courant sont égales à une longueur d'un cycle d'attribution prédéfini, la largeur de bande attribuée à chaque unité de réseau optique dans le cycle d'attribution courant étant un multiple entier d'une unité de transmission maximale de l'unité de réseau optique correspondante, respectivement ; et

- si les largeurs de bande calculées attribuées à toutes les unités de réseau optique dans le cycle d'attribution courant ne sont pas égales à la longueur du cycle d'attribution prédéfini, ajuster (404) une longueur du cycle d'attribution courant de sorte que la longueur du cycle d'attribution courant soit égale aux largeurs de bande attribuées à toutes les unités de réseau optique.

5. Procédé d'attribution de largeur de bande dynamique selon la revendication 4, dans lequel, avant d'ajuster la longueur du cycle d'attribution courant, le procédé consiste en outre à :

définir une valeur d'ajustement maximale de la longueur du cycle d'attribution, la valeur d'ajustement maximale étant inférieure ou égale à l'unité de transmission maximale ;

et ainsi, l'ajustement de la longueur du cycle d'attribution courant consiste spécifiquement à ajuster la longueur du cycle d'attribution courant en fonction de la valeur d'ajustement maximale.

6. Procédé d'attribution de largeur de bande dynamique selon la revendication 5, dans lequel l'ajustement de la longueur du cycle d'attribution courant en fonction de la valeur d'ajustement maximale consiste spécifiquement à :

- si les largeurs de bande calculées attribuées à toutes les unités de réseau optique dans le cycle d'attribution courant sont supérieures à la longueur du cycle d'attribution prédéfini, et qu'une différence entre les largeurs de bande et la longueur du cycle d'attribution prédéfini est inférieure à la valeur d'ajustement maximale, rajouter la différence dans un cycle d'attribution suivant ;

- si les largeurs de bande calculées attribuées à toutes les unités de réseau optique dans le cycle d'attribution courant sont supérieures à la longueur du cycle d'attribution prédéfini, et que la différence entre les largeurs de bande et la longueur du cycle d'attribution prédéfini est supérieure à la valeur d'ajustement maximale mais inférieure à l'unité de transmission maximale, emprunter des largeurs de bande du cycle d'attribution suivant à l'avance, une longueur des largeurs de bande empruntées à l'avance étant une différence entre la différence précédente et l'unité de transmission maximale ;

- si les largeurs de bande calculées attribuées à toutes les unités de réseau optique dans le cycle d'attribution courant sont inférieures à la longueur du cycle d'attribution prédéfini, et que la différence entre les largeurs de bande et la longueur du cycle d'attribution prédéfini est inférieure à la valeur d'ajustement maximale, emprunter des largeurs de bande du cycle d'attribution suivant à l'avance, une longueur des largeurs de bande empruntées à l'avance étant la différence ; et

- si les largeurs de bande calculées attribuées à toutes les unités de réseau optique dans le cycle d'attribution courant sont inférieures à la longueur du cycle d'attribution prédéfini, et que la différence entre les largeurs de bande et la longueur du cycle d'attribution prédéfini est supérieure à la valeur d'ajustement maximale mais inférieure à l'unité de transmission maximale, rajouter les largeurs de bande dans le cycle d'attribution suivant, une longueur des largeurs de bande rajoutées étant une différence entre la différence précédente et l'unité de transmission maximale.

7. Procédé d'attribution de largeur de bande dynamique selon la revendication 1, dans lequel l'envoi des largeurs de bande calculées aux unités de réseau optique consiste spécifiquement à, avant qu'un cycle d'attribution suivant commence, envoyer les largeurs de bande calculées attribuées dans le cycle d'attribution courant aux unités de réseau optique.

8. Appareil d'attribution de largeur de bande dynamique comprenant :

- un module d'obtention (501) conçu pour obtenir des demandes de largeur de bande provenant d'unités de réseau optique et recueillies lors d'un cycle d'attribution précédent ;
- un module de calcul (502) conçu pour calculer, en fonction des demandes de largeur de bande obtenues par le module d'obtention, des largeurs de bande attribuées à toutes les unités de réseau optique lors d'un cycle d'attribution courant, un temps de départ des largeurs de bande étant un point de départ d'un Nème cycle d'attribution après le cycle d'attribution courant et N étant un nombre naturel; et
- un module d'envoi (503) conçu pour envoyer les largeurs de bande calculées par le module de calcul aux unités de réseau optique de manière à recevoir des données envoyées par les unités de réseau optique au point de départ du Nème cycle d'attribution après le cycle d'attribution courant, **caractérisé par** un module de détermination de valeur de N, configuré pour déterminer une valeur de N en fonction de l'inégalité suivante :

(N-1)*une longueur du cycle d'attribution $\leq$ temps requis pour calculer les largeurs de bande + Max_RTT $\leq$ N*la longueur du cycle d'attribution, où Max_RTT est supérieur ou égal à une valeur maximale du temps aller-retour de toutes les unités de réseau optique.

9. Appareil d'attribution de largeur de bande dynamique selon la revendication 8, dans lequel le module de calcul (502) est conçu pour calculer, en fonction des demandes de largeur de bande et des largeurs de bande attribuées lors de N cycles d'attribution avant le cycle d'attribution courant, les largeurs de bande attribuées à toutes les unités de réseau optique dans le cycle d'attribution courant.

10. Appareil d'attribution de largeur de bande dynamique selon l'une quelconque des revendications 8 ou 9, comprenant en outre :

- un module d'estimation (604) conçu pour estimer si les largeurs de bande attribuées à toutes les unités de réseau optique dans le cycle d'attribution courant sont égales à une longueur d'un cycle d'attribution prédéfini, la largeur de bande attribuée à chaque unité de réseau optique dans le cycle d'attribution courant étant un multiple entier d'une unité de transmission maximale de l'unité de réseau optique correspondante, respectivement ; et
- un module d'ajustement de cycle d'attribution (605) conçu pour, lorsqu'un résultat d'estimation du module d'estimation est négatif, ajuster une longueur du cycle d'attribution courant de sorte que la longueur du cycle d'attribution courant soit égale aux largeurs de bande attribuées à toutes les unités de réseau optique.

11. Appareil d'attribution de largeur de bande dynamique selon la revendication 10, comprenant en outre :

un module de définition conçu pour définir une valeur d'ajustement maximale de la longueur du cycle d'attribution, et ainsi, le module d'ajustement de cycle d'attribution ajuste la longueur du cycle d'attribution courant en fonction de la valeur d'ajustement maximale définie par le module de définition.

12. Appareil d'attribution de largeur de bande dynamique selon la revendication 11, dans lequel le module d'ajustement de cycle d'attribution comprend :

- une unité de comparaison conçue pour comparer une différence entre les largeurs de bande attribuées à toutes les unités de réseau optique dans le cycle d'attribution courant et la longueur du cycle d'attribution prédéfini à la valeur d'ajustement maximale ; et

- une unité d'ajustement conçue pour, lorsque les largeurs de bande calculées attribuées à toutes les unités de réseau optique dans le cycle d'attribution courant sont supérieures à la longueur du cycle d'attribution prédéfini, et que la différence entre les largeurs de bande et la longueur du cycle d'attribution prédéfini est inférieure à la valeur d'ajustement maximale, rajouter la différence dans un cycle d'attribution suivant ;

- lorsque les largeurs de bande calculées attribuées à toutes les unités de réseau optique dans le cycle d'attribution courant sont supérieures à la longueur du cycle d'attribution prédéfini, et que la différence entre les largeurs de bande et la longueur du cycle d'attribution prédéfini est supérieure à la valeur d'ajustement maximale mais inférieure à l'unité de transmission maximale, emprunter des largeurs de bande du cycle d'attribution suivant à l'avance, une longueur des largeurs de bande empruntées à l'avance étant une différence entre la différence précédente et l'unité de transmission maximale ;

- lorsque les largeurs de bande calculées attribuées à toutes les unités de réseau optique dans le cycle d'attribution courant sont inférieures à la longueur du cycle d'attribution prédéfini, et que la différence entre les largeurs de bande et la longueur du cycle d'attribution prédéfini est inférieure à la valeur d'ajustement maximale, emprunter des largeurs de bande du cycle d'attribution suivant à l'avance, une longueur des largeurs de bande empruntées à l'avance étant la différence ; et

- lorsque les largeurs de bande calculées attribuées à toutes les unités de réseau optique dans le cycle d'attribution courant sont inférieures à la longueur du cycle d'attribution prédéfini, et que la différence entre les largeurs de bande et la longueur du cycle d'attribution prédéfini est supérieure à la valeur d'ajustement maximale mais inférieure à l'unité de transmission maximale, rajouter les largeurs de bande dans le cycle d'attribution suivant, une longueur des largeurs de bande rajoutées étant une différence entre la différence précédente et l'unité de transmission maximale.

13. Appareil d'attribution de largeur de bande dynamique selon la revendication 8, dans lequel le module d'envoi (503) est conçu pour, avant qu'un cycle d'attribution suivant commence, envoyer les largeurs de bande calculées par le module de calcul aux unités de réseau optique avant le démarrage de manière à recevoir des données envoyées par les unités de réseau optique au point de départ du Nème cycle d'attribution après le cycle d'attribution courant.

FIG. 1

Obtain bandwidth requests that are from ONUs and collected in a previous allocation cycle — 201

Calculate, according to the bandwidth requests, bandwidths allocated to all the ONUs in a current allocation cycle, where a start time of the bandwidths is a start point of an N$^{th}$ allocation cycle after the current allocation cycle, and N is a natural number — 202

Deliver the calculated bandwidths to the ONUs, so as to receive data sent by the ONUs at the start point of the N$^{th}$ allocation cycle after the current allocation cycle — 203

FIG. 2

301

Obtain bandwidth requests that are from ONUs and collected in a previous allocation cycle

302

Calculate, according to the bandwidth requests, bandwidths allocated to all the ONUs in a current allocation cycle, where a start time of the bandwidths is a start point of an $N^{th}$ allocation cycle after the current allocation cycle, and N is a natural number

303

Deliver the calculated bandwidths to the ONUs, so as to receive data sent by the ONUs at the start point of the $N^{th}$ allocation cycle after the current allocation cycle

FIG. 3a

FIG. 3b

EP 2 608 438 B1

Obtain bandwidth requests that are from an ONU and collected in a previous allocation cycle ⟋ 401

↓

Calculate, according to the bandwidth requests, bandwidths allocated to all the ONUs in a current allocation cycle, where a start time of the bandwidths is a start point of an $N^{th}$ allocation cycle after the current allocation cycle, and N is a natural number ⟋ 402

↓

Judge whether the calculated bandwidths allocated to all ONUs in the current allocation cycle are equal to the length of a preset allocation cycle ⟋ 403

↓

Adjust the length of the current allocation cycle, so that the length of the current allocation cycle is equal to the bandwidths allocated to all the ONUs ⟋ 404

↓

Deliver the calculated bandwidths allocated in the current allocation cycle to the ONUs so as to receive data sent by the ONUs at the start point of the $N^{th}$ allocation cycle after the current allocation cycle ⟋ 405

FIG. 4a

FIG. 4b

Obtaining module ⟜ 501

↓

Calculation module ⟜ 502

↓

Delivery module ⟜ 503

FIG. 5

Obtaining module ⟜ 601

↓

Calculation module ⟜ 602 → Judgment module ⟜ 604

↓ ↓

Delivery module ⟜ 603    Allocation cycle adjustment module ⟜ 605

FIG. 6

**EP 2 608 438 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1796131 A1